Europäisches Patentamt

(19) European Patent Office

Office européen des brevets

(11) Publication number: **0 305 670**
**B1**

(12) **EUROPEAN PATENT SPECIFICATION**

(45) Date of publication of the patent specification:
**17.10.90**

(21) Application number: **88110152.1**

(22) Date of filing: **25.06.88**

(51) Int. Cl.⁵: **F02P 1/02,** F02P 3/06,
H02K 21/48

(54) Flywheel generator with improved ignition pilot device.

(30) Priority: **28.08.87 IT 8344587**

(43) Date of publication of application:
**08.03.89 Bulletin 89/10**

(45) Publication of the grant of the patent:
**17.10.90 Bulletin 90/42**

(84) Designated Contracting States:
**AT DE ES FR SE**

(56) References cited:
**EP-A- 0 042 343**
**DE-A- 3 512 411**
**US-A- 3 775 627**
**US-A- 3 821 570**

(73) Proprietor: **DUCATI ENERGIA S.P.A., Via Marco Emilio
Lepido, 182, I-40132 Bologna(IT)**

(72) Inventor: **Leonardi, Danio, Via Marco Emilio Lepido 182,
I-40132 Bologna(IT)**

(74) Representative: **D'Agostini, Giovanni, Dr., D'AGOSTINI
ORGANIZZAZIONE n. 17 via G.Giusti, I-33100 Udine(IT)**

ACTORUM AG

## Description

The subject of the present invention is a FLYWHEEL GENERATOR WITH IMPROVED IGNITION PILOT coil means.

The invention has a special and convenient, although not exclusive, application for use in the sector of flywheel generators for internal combustion motors especially, although not exclusively, for vehicles with two and three wheels.

In the present state of art it is known that in order to effect ignition in a regular and efficient manner, the following are used:

— a stator comprising a wheel-spoke type, lamellar pack, on the spokes of which windings are made so as to form a plurality of windings;
— a sector-type rotor of permanent magnets arranged in an anular form and corresponding to the respective number of windings to be energized;

The above in order to realize:

— a plurality of main coils (so as to charge ignition capacitor means, to charge the battery and power supply for vehicle services), prearranged radially on the same number of spokes or on chordal cores;
— at least one pilot coil destined to control and regulate the moment and manner of said discharge of said ignition capacitor means.

This traditional solution is disclosed for example in US-A 3 821 570 (BURSON), in which the pilot coil (trigger mechanism) is shifted laterally in respect to respective main coils and the trigger is activalte by a separate permanent magnet.

It is to be noted that the pilot coil is always the smallest and does not necessarily have to be placed in equiangular division with the others; this is also in order so as not to make the generator too bulky, and therefore it is usually placed between the two spokes of the main coils.

Problems arise when it is necessary to adjust the position and dimensioning, as well as reaching the number of sparks per rev (number of polar pairs) for example in (BURSON) solution is necessary to deplace also the respective magnet in corespondence of the new position of the trigger that causes further the inconveniences of the necessity of at least the new static balance (conditions of indifferent balance of rotor), and of the dynamic balance (revolving balance, of axial nature too) in order to avoid oscillations and vibrations in the rotor-bearing axis.

Other solutions foresee inter-spoke lamellar appendixes involving a pair of coils, energized in opposite ways, respectively from a NORTH polarity and a SOUTH one of two adjacent magnetic sectors utilized to energize the other coils (main coils).

This solution is disclosed in EP-A 0 042 343 (PLESSEY).

In fact two coils are necessary for operation because they work in synergy with inverted polarity, that means when we do not need spark signal both the coils are excited and their sum result zero, at the contrary at the position where a Spark signal is needed, a piece of plastoferrite in the rotor is as-ported in order to modify the magnetic flux in only one of the couple of coils.

However, in this case too, although the solution solves many problems, it is complicated and expensive for the use of two coils and respective diodes to control the two coils realizing a very complex electronic circuit. The present invention, according to the characteristics given in the attached claims, solves the problem by a flywheel generator with ignition pilot coil means, comprising a plurality of main coils for at least the ignition system, in a wheel-spoke shaped stator unit, around which a rotor having magnetic sectors permanently magnetized to have a plurality of NORTH-SOUTH poles is provided for the respective energizing of said coils, characterised in that:

— in said stator unit, said pilot coil means for the ignition system, is shifted sideways out of the plain in which said main coils lie,
— said rotor presents an annular magnetic band with two different NORTH-SOUTH magnetic sectors, in which:
— the first NORTH-SOUTH magnetic sector is wider then the second so as to activate said main coils and said pilot coil means,
— the second NORTH-SOUTH magnetic sector activating said main coils only.

The advantages obtained with this innovation consist essentially in the fact that:

— the number of pilotings, and therefore the number of ignitions per rev of the rotor, is freed from the number of the generator's polarities;
— a considerable simplicity in construction is reached;
— the rotor is more easily and safely balanced;
— the pilot coil can be better regulated in the optimal position and dimensioned in a rational way, independently of construction constraints, both of the rotoric system and that of the statoric one.

The permanent magnetic means of the rotoric system are advantageously realized in a plastoferrite ring, comprising:

— a wide anular band (F) with the entire circumference sub-divided in a plurality of areas (sectors), magnetized alternatively NORTH-SOUTH.
— at least one narrower, adjacent anular band (f), comprising at least one neutral arc and at least two sectors magnetized NORTH-SOUTH.

This solution gives complete balance, not only static but also dynamic, as the plastoferrite is uniformly distributed in the rotor independently of the respective magnetization, that notoriously has no weight.

The invention is hereafter explained in more detail with the help of drawings showing the preferential solutions, the execution details ol which are not to be held as limiting, but only as examples.

Figure 1 gives a front prospect of a first rotor with a plastoferrite, magnetic, energizing ring.

Figure 2 gives a view from above of the stator with the pilot coil out of axis in respect to the main coils, as per the invention.

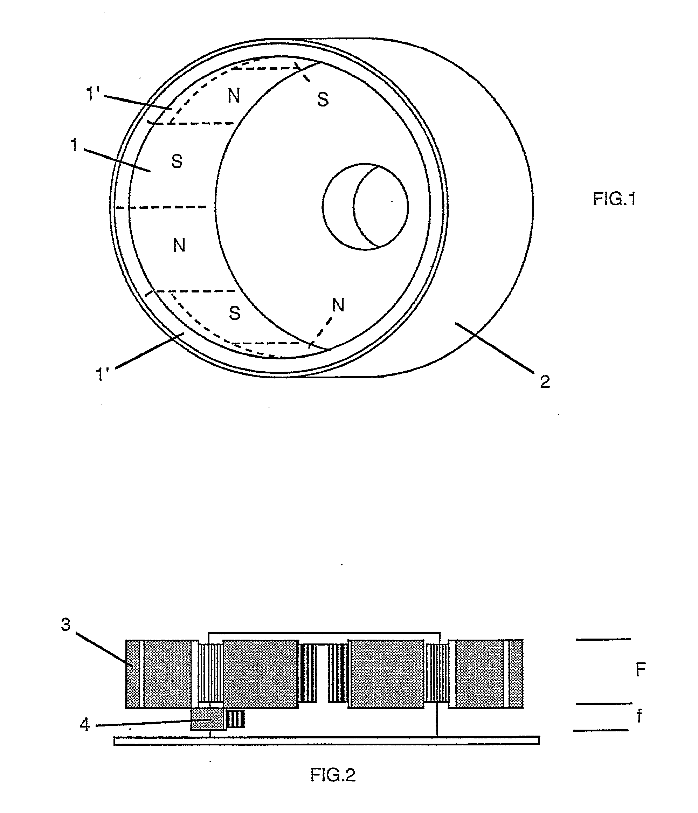

With reference to figure 1, it can be seen that with 2 is indicated the rotoric containing casing, and that inside it there is a plastoferrite ring comprising, as per the invention, sectors which are magnetically activated from NORTH to SOUTH (1), a couple of which extend over the entire width of the plastoferrite ring whereas a neutral, that is to say, non-magnetized, semi-anular, lateral band (1') extends beyond them.

By coupling the rotor of Fig. 1 with the stator of Fig. 2, the main coils (3) will be energized by the magnetized sectors (1) of the wider, main energizing band (F), while the secondary, pilot coil of the ignition system (4) arranged, according to the invention, out of the revolving plane of magnetic influence (f), is energized in a completely independent way which is not tied to the said energizing sectors of the main coils (3) ...

It can be seen from Figure 2 that the pilot coil (4) is placed at the side in respect to the anular surface of magnetic influence (F) of the main coils (3), so as to be independently influenced by a band having adjacent magnetization (f).

## Claims

1. Flywheel generator with ignition pilot coil means, comprising a plurality of main coils (3) for at least the ingnition system (4), in a wheel-spoke shaped stator unit, around which a rotor having magnetic sectors permanently magnetized to have a plurality of NORTH-SOUTH poles is provided for the respective energizing of said coils, characterised in that:
   – in said stator unit, said pilot coil means for the ignition system (4), is shifted sideways out of the plain in which said main coils (3) lie,
   – said rotor presents an annular magnetic band with two different NORTH-SOUTH magnetic sectors (1, 1'), in which:
   – the first NORTH-SOUTH magnetic sector (1) is wider then the second (1') so as to activate said main coils (3) and said pilot coil means (4),
   – the second NORTH-SOUTH magnetic sector activating said main coils only.
2. Flywheel generator with ignition pilot device, according to claim 1, characterized in that said annular magnetic band is realized in a plastoferrite ring having a plurality of sectors magnetized NORTH-SOUTH, of which:
   – a part is magnetized for the entire width, of magnetic influence (F+f) to the said first main coil means (3) and said second pilot coil means (4),
   – a part is magnetized for a lesser width (F), excluding the activation band (f) of said pilot coil means (4).
3. Flywheel generator with ignition pilot device, according to claim 1, characterized in that said annular magnetic band comprises an anular arangement of magnetic NORTH-SOUTH sectors, of which:

– a magnetized part extends coplanarly to the annular width only of surface influence of said main coils (3);
   – a magnetized part extends for the entire width (F+f) of magnetic influence of said pilot coil (4), and for a predominant part at least of the said main coils' (3) surface of influence.

## Patentansprüche

1. Schwungradgenerator mit Pilotzündspuleneinrichtung, mil einer Anzahl von Hauptspulen (3) für zumindest das Zündsystem (4), in einer radspeichenförmigen Ständereinheit, um die herum zur Aufladung besagter Spulen sich ein Rotor befindet, der über ständig magnetisierte Felder verfügt, so daß eine Vielzahl von NORD-SÜD-Polen vorhanden ist; dieser Generator ist wie folgt beschaffen:
   – in der genannten Ständereinheit ist die besagte Pilotspuleneinheit für das Zündsystem (4) seitlich aus der Ebene herausversetzt, in der die genannten Hauptspulen liegen;
   – der genannte Rotor verfügt über ein ringförmiges Magnetball mit zwei verschiedenen NORD-SÜD-Magnetfeldern (1, 1'), auf dem:
   – das erste NORD-SÜD-Magnetfeld (1) größer als das zweite (1') ist, um die genannten Hauptspulen (3) und die besagte Pilotspuleneinheit (4) zu aktivieren;
   – das zweite NORD-SÜD-Magnetfeld nur die genannten Hauptspulen aktiviert.
2. Schwungradgenerator mit Pilotzündungseinrichtung wie unter Anspruch 1, charakterisiert dadurch, daß das genannte ringförmige Magnetband sich in einem Plastik-Eisen-Ring befindet, der eine Vielzahl von NORD-SÜD-magnetisierten Feldern aufweist, von welchen:
   – einige in gesamter Breite magnetisiert sind, mil magnetischem Einfluß (F+f) auf die genannte erste Hauptspuleneinheit (3) und die besagte zweite Pilotspuleneinheit (4), sowie
   – einige dagegen nur auf einer geringeren Breite (F) magnetisiert sind, ausgenommen das Aktivierband (f) der genannten Pilotspuleneinheit (4).
3. Schwungradgenerator mit Pilotzündeinrichtung wie unter Anspruch 1, charakterisiert dadurch, daß das genannte ringförmige Magnetband eine ringförmige Anordnung von NORD-SÜD-Magnetfeldern aufweist, von denen:
   – ein magnetisierter Teil sich koplanar zur Ringbreite erstreckt, nur mit Oberflächeneinfluß auf besagte Hauptspulen (3), während
   – ein anderer magnetisierter Teil sich über die gesamte Breite (F+f) des magnetischen Einflusses auf die genannte Hauptspule (4) erstreckt, sowie über einen zumindest dominierenden Teil der Einflußoberfläche der genannten Hauptspulen (3).

## Revendications

1. Volant générateur avec allumage pilote au moyen de bobine, comprenant une pluralité de principales bobines (3) au moins pour le système d'allumage (4), dans un bloc stator en forme de rayon de roue, autour duquel un rotor ayant des secteurs magnétiques magnétisés en permanence de façon à avoir une pluralité de pôles NORD-SUD, est pourvu pour la respective exitation, des dites bobines, caractérisé en ce que:

– en le dit bloc stator, la dite bobine pilote pour l'allumage du système (4), est déplacée hors du plan dans lequel les dites principales bobines (3) sont étendues,

– le dit rotor présente une bande magnétique annulaire avec deux différents secteurs magnétiques NORD-SUD (1, 1'), dont:

– le premier secteur magnétique NORD-SUD (1) est plus large que le deuxième (1') de façon à activer les dites principales bobines (3) et la dite bobine pilote (4),

– le deuxième secteur magnétique NORD-SUD activant seulement les dites principales bobines.

2. Volant générateur avec dispositif d'allumage pilote, conformément à la revendication 1, caractérisé en ce que la dite bande annulaire magnétique est réalisée dans un anneau plastoferrite ayant une pluralité de secteurs magnétiques NORD-SUD, dont:

– une partie est magnétisée sur toute la largeur, d'une unfluence (F+f) vers la dite première principale bobine (3) et la dite seconde bobine pilote (4), et

– une partie est magnétisée sur une moindre largeur (F), excluant l'activation de la bande (f) de la dite bobine pilote (4).

3. Volant générateur avec dispositif d'allumage pilote, conformément à la revendication 1, caractérisé en ce que la dite bande magnétique annulaire comprenant un arrangement en forme d'anneau de secteurs magnétiques NORD-SUD, dont:

– une partie magnétisée s'étend de façon coplanaire seulement sur la largeur annulaire de la surface d'influence des principales bobines (3);

– une partie magnétisée s'étend sur toute la largeur (F+f) de l'influence magnétique de la dite bobine pilote (4), et pour au moins une partie prédominante de la surface d'influence des dites bobines principales (3).

FIG.1

FIG.2